# EUROPEAN PATENT APPLICATION

(11) **EP 2 837 655 A2**
(43) Date of publication of application: **18.02.2015**
(21) Application number: 14181076.2
(22) Date of filing: 14.08.2014
(51) Int. Cl.: C08L 23/16, C08L 83/06

(54) **Elastomeric blend composition and use in window spacers**

(30) Priority: 16.08.2013 GB 201314688
(71) Applicant: Thermoseal Group Limited, Birmingham B6 7AF (GB)
(72) Inventor: Kale, Rohit, Birmingham, West Midlands B6 7AF (GB); Patterson, Gwain Robertson, Birmingham, West Midlands B6 7AF (GB)
(74) Representative: Trueman, Lucy Petra

(57) **Abstract**

The present invention relates to an elastomeric blend composition comprising ethylene - propylene - diene (EPDM) or ethylene - propylene (EPM) copolymer with silicone rubber (VMQ) and one or more of a desiccant and blowing or foaming agent. Also provided is a method of manufacturing the blend and a spacer comprising or produced for the blend.

## Description

This invention relates to an elastomeric blend composition and a novel spacer made therefrom for use in a sealed multiple glazed unit, particularly a double glazed unit.

Although the invention will be described in terms of a double glazed unit, it could also be used for multiple glazed units e.g. triple glazed units.

Known double glazed units typically consist of two glazing panes, usually of glass, which are sealed to and separated by a self-supporting spacer, usually of tube of metal, around the outer edges of the glazing panes. The spacer tube may be hollow and may be formed into any shape by bending and/or by joining (e.g. using corner keys) as is well known in the industry. The spacer tube contains a desiccant and is sandwiched and sealed between the two glazing panes to form a unit, defining a cavity (interspace) between the glazing panes. The sealing against the glazing panes may be by way of a sealant and/or adhesive e.g. butyl rubber, polysulphide or polyurethane, again as is known in the industry. In order to improve the heat insulation performance of the glazed unit, it is desirable although not essential to introduce an inert gas such as argon and/or xenon or similar gas into the cavity, in which case if the spacer tube is not constructed of 100% metal it is usual to have a composite hollow spacer tube with a gas barrier of metal tape (e.g. of steel or aluminium) around its outer edge i.e. facing away from the cavity (interspace).

In the past efforts have been made to use polymeric materials such as silicone and / or polyurethane to form moisture permeable semi-rigid or flexible foam spacers containing desiccant for multiple pane insulating sealed glazing units having high thermal performance, as described U.S. Pat. No. 4,831,799 and European Pat. No. 0 261 923 B1 issued to Glover et al. The main drawback of this is high product cost.

U.S. Pat. No. 4,808,643 issued to Lemonie et al. describes an EPDM/EPR rubber silicone composition which combine the desirable end use and mechanical properties of EPDM/EPR rubber with the good thermal characteristics of silicone. The combination of properties is necessary for increasing number of applications where high thermal performance is desired.

The present invention relates to an elastomeric blend composition comprising ethylene - propylene - diene (EPDM) and/or ethylene - propylene (EPM) copolymer with silicone rubber (VMQ) and one or more of a desiccant and blowing or foaming agent.

The elastomeric blend is a high performance blend and is cost effective.

The elastomer blend can be used in the production of a flexible foam spacer bar to use in multiple glazed sealed unit.

Throughout the specification for simplicity the abbreviation EPDM/EPM is used to cover EPDM rubber or EPM rubber or a blend of EPDM rubber and EPM rubber.

In one embodiment, the blend comprises EPDM and/or EPM rubber in an amount of from 20 to 80 phr (parts per hundred of rubber), preferably 30 to 60 phr, for example 35 or 60 phr.

In one embodiment, the blend comprises silicone rubber in an amount of from 20 to 80 phr, preferably 30 to 60 phr, for example 40 or 65 phr.

The moisture desiccant may be present in an amount of from 30 to 120 phr, preferably 60 to 100 phr, for example 80 or 90 phr.

The dessicant may be a 3 or 4Å desiccant, a 3Å molecular sieve, or a similar dessicant or blend of desiccant. Suitable desiccants could include silica gel, activated charcoal, crystalline aluminosilicate, calcium sulfate, calcium chloride, montmorillonite clay, and molecular sieves.

In one embodiment, the blend may also comprise a vulcanisation additive such as an organic peroxide, e.g. 2,5- dimethyl-2,5-di(tert-butylperoxy) hexane. The vulcanisation additive may be present in an amount of from 0.5 to 5 phr, preferably 1 to 3 phr for example 2 or 2.5 phr.

In one embodiment, the blend may comprise a chemical foaming or blowing agent, e.g. 4, 4'-Oxybis-benzenesulfonylhydrazide (OBSH) and Azodicarbonic acid diamide (ADA). The foaming or blowing agent may be present in an amount of from about 0.2 to 12 phr, preferably 0.4 to 10 phr, for example 0.8 or 8 phr.

In one embodiment, the blend may comprise a pigment, for example a carbon black. The pigment may be in powder or paste form. The pigment may be present in an amount of from about 1 to 12 phr, preferably from 3 to 10 phr, for example 4 or 6 phr.

The ability to include a pigment in to the elastomeric blend composition allows window manufacturers to match the colour of a spacer made from the elastomeric blend composition to the window system.

In one embodiment the elastomeric blend may include a significant amount of desiccant for e.g. 3Å or 4Å aluminosilicate molecular sieve, vulcanisation/crosslinking agent such as an organic peroxide, an organic chemical blowing agent and a pigment.

In one embodiment the spacer may comprise, consist, or consist essentially of the following ingredients:
1. EPDM/EPM rubber
2. Silicone rubber
3. Vulcanisation additives
4. 3Å molecular sieve powder (desiccant powder)
5. Foaming/blowing agent
6. Pigment

Two example compositions of the elastomer blend composition are:

### Example composition 1

EPDM rubber Keltan 2650, sold by Lanxess elastomers - 60 phr
Silicone rubber Bluesil MF135U, sold by Bluestar silicones- 40 phr
3Å desiccant powder Sylosiv K300, sold by Grace Davison - 80 phr
Blowing agent OBSH 75 - 0.8 phr
Organic peroxide Trigonox 101, sold by Akzonobel - 2.5 phr
Carbon black N550 - 6 phr

### Example composition 2

EPDM rubber Royalene 547, sold by Lion copolymers - 35 phr
Silicone rubber Silplus 40EX sold by Momentive performance materials - 65 phr
3Å desiccant powder Sylosiv K300, sold by Grace Davison - 90 phr
Blowing agent ADA 75 - 8 phr
Organic peroxide Perkadox 14-40, sold by Akzonobel - 2 phr
Carbon black N330 - 4 phr

In addition the present invention relates to the method of manufacture of the blend of the present invention. The components can be formed into an elastomeric blend by compounding or mixing, for example in an intermixer such as a Banbury mixer or kneader. The blend may then be milled or open mill mixed, for example using a two roll mill. An extruder such as a Barwell extruder may be used to form a continuous strip of material for further processing.

In one embodiment the elastomeric blend composition is produced in pellets for further processing.

The present invention also relates to a spacer for use in sealed multiple glazed units comprising or produced from the elastomer blend composition of the present invention.

The spacer may be flexible. The spacer may be foamed. The spacer may be self supporting.

The spacer may be elongate. The spacer may be an extrusion. The spacer may be any suitable shape in cross section, for example rectangular, square or T-shaped.

The spacer may be provided with a gas barrier, for example a tape, made from materials such as metallised polyester or metal (e.g. of steel or aluminium) or a polymeric material such as polyester or a multilayered polyethylene, around part of its outer edge. The barrier tape may be of any suitable thickness, for example from 1 to 1000 microns. A double sided adhesive tape may be applied on two opposing sides of the spacer, for example a pressure sensitive acrylic adhesive.

In one embodiment, the spacer may contain no chemicals which cause chemical condensation/fogging inside the glazing unit.

This spacer system may eliminate outgassing.

The spacer of the present invention has a number of benefits and advantages associated with it. The spacer is not subject to the drying and cracking issues associated with EPDM/EPM rubbers. The spacer is not subject to the issues of outgassing or volatile matter associated with the use of oils to prevent the drying and cracking of EPDM/EPM materials as these are not required. The spacer is not subject to the high costs of a silicone rubber spacer. The spacer is capable of absorbing the moisture condensation inside a glazing unit which is caused due to temperature difference and hence virtually eliminates the chance of mould/bacterial growth.

The spacer of the present invention has excellent heat/ UV and weather stability and therefore will not subject to significant colour change or cracking.

The spacer of the present invention has exceptional thermal performance and therefore in use reduces the amount of heat escaping through the glazed unit.

### Method

The present invention also relates to the method of manufacture of an elastomeric blend and a spacer according to the present invention.

The components of the blend can be formed into an EPDM/EPM and silicone blend by compounding or mixing, for example in an intermixer such as a Banbury mixer or kneader. The blend may then be milled or open mill mixed, for example using a two roll mill. An extruder such as a Barwell extruder may be used to form a continuous strip of material for further processing in a single screw extruder. The material may alternatively be formed into pellets for further processing

The spacer may be produced by using single screw extrusion process. Vulcanisation/curing and/or foaming can be performed by heating the profile, using for example salt bath, hot air, warming tunnel, UV lamp tunnel, usually between temperature of 160 to 220° C. A post cure may be required and may be performed by heating in a hot air oven at about 150 to 200° C.

The back of the spacer may then be coated with moisture/gas barrier tape using a laminating machine. Pressure sensitive polymeric adhesive tapes may be applied on opposite sides along the length of the spacer. The spacer may be coiled on a reel and the reel may be vacuum sealed for storage.

An embodiment of the invention will now be further described with reference to the figures in which:
Figure 1 is a double glazed unit comprising a spacer of the present invention: and
Figure 2 is a flow diagram setting out the process of manufacture of the blend and spacer of the invention.

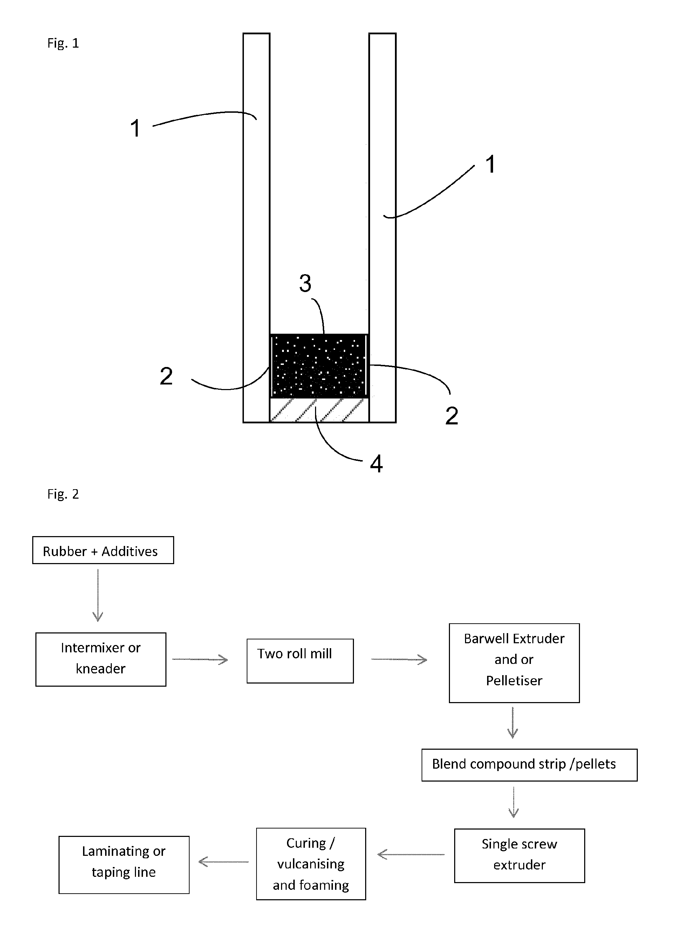

This flexible spacer bar can be used for the construction of standard double glazed or multiple glazed units (Fig. 1), and can be formed into any shape by bending and or by joining or notching the corners of the spacer bar (3) and applying a barrier tape over the joint. The sealed unit from (Fig.1) wherein the glazing panes (1) are made of glass or polymeric material and or any other transparent, translucent or opaque material, the pressure sensitive acrylic adhesive (2) forms the primary seal with glazing panes (1), the cavity between the glazing unit may be sealed by using hot melt butyl or warm melt sealants (4). In order to improve the thermal insulation performance of glazing unit the inert gas such as argon/krypton/xenon may be introduced in to the cavity / space (5) between the panes.

## Claims

1. An elastomeric blend composition comprising ethylene - propylene - diene (EPDM) or ethylene - propylene (EPM) copolymer with silicone rubber (VMQ) and one or more of a desiccant and blowing or foaming agent.

2. The blend of claim 1 comprising EPDM and/or EPM rubber in an amount of from 20 to 80 phr (parts per hundred of rubber).

3. The blend of claim 1 or 2 comprising silicone rubber in an amount of from 20 to 80 phr.

4. The blend of any preceding claim comprising a desiccant in an amount of from 30 to 120 phr.

5. The blend of any preceding claim comprising vulcanisation additives in an amount of from 0.5 to 5 phr.

6. The blend of any preceding claim comprising a chemical foaming or blowing agent in an amount of from about 0.2 to 12 phr.

7. The blend of any preceding claim comprising a pigment in an amount of from about 1 to 12 phr.

8. A method of manufacture of the blend of any of claims 1 to 7 wherein the components are formed into an elastomeric blend by compounding or mixing

9. The method of claim 8 wherein the blend may then be milled or open mill mixed.

10. The method of claim 9 wherein an extruder is used to form a continuous strip of material for further processing.

11. The method of claim 9 wherein the elastomeric blend composition is produced in pellets for further processing.

12. A spacer for use in sealed multiple glazed units comprising or produced from the elastomer blend composition of claims 1 to 7.

13. The spacer of claim 12 wherein the spacer is one or more of:
a) flexible;
b) self-supporting;
c) elongate; and
d) provided with a gas barrier.

14. The spacer of claim 13, part d) wherein the gas barrier is a tape made from materials such as metallised polyester or metal (e.g. of steel or aluminium) or a polymeric material (e.g.) polyester or a multilayered polyethylene, around part of its outer edge.

15. The spacer of any of claims 12 to 14 wherein a double sided adhesive tape (e.g. a pressure sensitive acrylic adhesive) is applied on two opposing sides of the spacer.
